# FASCICULE DE BREVET EUROPEEN

(11) **EP 2 795 224 B1**
(45) Date de publication et mention de la délivrance du brevet: **25.11.2015**
(21) Numéro de dépôt: 12815667.6
(22) Date de dépôt: 18.12.2012
(51) Int. Cl.: F28D 9/00, F28F 9/02, F28F 21/06, F02B 29/04

(54) **ÉCHANGEUR THERMIQUE, NOTAMMENT POUR VÉHICULE AUTOMOBILE**
WÄRMEAUSTAUSCHER, INSBESONDERE FÜR KRAFTFAHRZEUGE
HEAT EXCHANGER, IN PARTICULAR FOR A MOTOR VEHICLE

(30) Priorité: 20.12.2011 FR 1162060
(43) Date de publication de la demande: 29.10.2014
(73) Titulaire: Valeo Systemes Thermiques, 78320 Le Mesnil-Saint-Denis Cedex (FR)
(72) Inventeur: MARTINS, Carlos, F-78150 Le Chesnay (FR); MAGNIER-CATHENOD, Anne-Sylvie, F-92210 Saint-Cloud (FR); BERNARD, Jean-Sylvain, F-78320 Le Mesnil-Saint-Denis (FR)
(74) Mandataire: Metz, Gaëlle
(86) Numéro de dépôt international: PCT/EP2012/075997
(87) Numéro de publication internationale: WO 2013/092617

(56) Documents cités:
- EP-A2- 1 995 544
- DE-A1-102009 009 807
- FR-A1- 2 855 605

## Description

L'invention concerne un échangeur thermique notamment pour véhicule automobile, correspondant au préambule de la revendication 1. Un tel échangeur est connu du document FR2855605.

Un domaine d'application préférentiel de l'invention est celui des moteurs thermiques suralimentés, notamment de véhicules automobiles, qui utilisent un échangeur de chaleur particulier, encore appelé refroidisseur d'air de suralimentation (en abrégé RAS), pour refroidir un fluide, à savoir l'air de suralimentation du moteur.

En effet, les moteurs thermiques suralimentés, ou turbo-compressés, en particulier les moteurs diesel, sont alimentés en air comprimé appelé air de suralimentation provenant d'un turbo-compresseur actionné par les gaz d'échappement du moteur.

Toutefois, cette compression a pour effet d'échauffer l'air qui se trouve à une température trop élevée et il est souhaitable, pour un bon fonctionnement du moteur, de de le refroidir afin d'abaisser sa température avant son admission dans les cylindres du moteur.

On utilise pour cela, de manière classique, un échangeur thermique appelé refroidisseur d'air de suralimentation.

Ce refroidisseur a pour fonction de refroidir l'air de suralimentation par échange thermique avec un autre fluide comme de l'air extérieur ou un liquide comme l'eau du circuit de refroidissement du moteur, formant ainsi un échangeur du type air/air ou liquide/air.

De façon connue, un échangeur thermique, et plus précisément un refroidisseur d'air de suralimentation, comprend des éléments d'échange thermique et d'écoulement de fluide dans lesquels circulent des fluides échangeant de la chaleur entre eux.

De nombreuses associations de fluides peuvent être envisagées, qu'il s'agisse de liquides et/ou de gaz.

De nombreuses configurations structurelles sont envisageables.

On connaît des échangeurs comprenant un faisceau d'échange thermique comprenant un empilement de plaques disposées parallèlement les unes aux autres sur une ou plusieurs rangées parallèles entre elles, ces plaques étant agencées pour définir d'une part des premiers canaux de circulation d'un premier fluide et d'autre part des seconds canaux de circulation d'un deuxième fluide en échangeant de la chaleur avec le premier fluide.

Ces plaques peuvent être alternées avec des éléments de perturbation de l'écoulement d'un fluide, par exemple d'un fluide gazeux comme l'air de suralimentation.

Selon une solution connue un échangeur comporte une enveloppe de réception logeant le faisceau d'échange thermique, une boîte collectrice d'entrée et une boîte collectrice de sortie pour le fluide gazeux tel que l'air de suralimentation, disposées de part et d'autre du faisceau.

Ces boîtes collectrices permettent l'admission et l'évacuation de l'air de suralimentation à travers l'échangeur.

Selon une solution connue, les boîtes sont assemblées au faisceau d'échange thermique par collage.

De plus, dans le cas d'un refroidisseur du type liquide/air, ce dernier peut être implanté dans un endroit choisi du compartiment moteur, en particulier près du moteur. À cet effet, la boîte de sortie peut être assemblée à la culasse du moteur, soit directement, soit par un élément intermédiaire, et assure notamment la fonction d'admission de l'air de suralimentation vers chacun des cylindres du moteur.

Un tel échangeur est sollicité mécaniquement, en particulier au droit des fixations sur la culasse du moteur.

Ainsi, la liaison obtenue par collage entre le faisceau et les boîtes collectrices peut être rompue brutalement, notamment au niveau des zones de fortes sollicitations mécaniques.

L'invention a pour objectif de pallier cet inconvénient de l'art antérieur en proposant un échangeur thermique dans lequel la liaison entre le faisceau d'échange thermique et au moins une des boîtes collectrices est renforcée.

À cet effet, l'invention a pour objet un échangeur thermique pour véhicule automobile, comprenant :
un faisceau d'échange thermique entre au moins un premier et un deuxième fluides,
   - une enveloppe de réception dudit faisceau comportant deux extrémités opposées qui dépassent de part et d'autre du faisceau,
   - au moins une boîte collectrice pour le premier fluide, ladite boîte collectrice étant réalisée en matière plastique et comportant respectivement un talon présentant une gorge de réception d'une extrémité de l'enveloppe et d'une colle, pour l'assemblage du faisceau à la boîte collectrice par collage,
caractérisé en ce qu'il comprend en outre un renfort métallique agencé en contact mécanique d'une part avec au moins une boîte collectrice et d'autre part avec l'extrémité de l'enveloppe reçue dans la gorge de la boîte collectrice.

Le renfort métallique, réalisé d'une seule pièce avec le talon de la boîte collectrice, ou encore clippé ou serti sur le talon, permet notamment d'assurer un maintien mécanique de l'extrémité de l'enveloppe reçue dans la gorge, afin de renforcer la liaison obtenue par collage entre le faisceau et cette boîte collectrice.

De plus, la colle peut être disposée en quantité débordante dans la gorge du talon de manière à combler tous les jeux d'assemblage dans la gorge.

Ledit échangeur peut en outre comporter une ou plusieurs caractéristiques suivantes, prises séparément ou en combinaison :
- l'enveloppe présente une extrémité recourbée contre laquelle le renfort métallique est agencé en appui,
- le renfort métallique comprend au moins un insert métallique moulé dans le talon d'une boîte collectrice, de manière à être réalisé d'une seule pièce avec la boîte collectrice,
- l'insert métallique est agencé de manière à définir une paroi latérale de la gorge dans le talon de la boîte collectrice,
- l'insert métallique présente une longueur ancrée dans le talon supérieure à la profondeur de la gorge dans le talon de la boîte collectrice,
- l'insert métallique est serti sur l'extrémité de l'enveloppe,
- l'insert est serti sur l'extrémité de l'enveloppe par déformation locale,
- l'insert est agencé sur toute la périphérie du talon de la boîte collectrice,
- le renfort métallique comprend au moins une barrette de fixation,
- la barrette de fixation présente une forme sensiblement en « U »,
- la barrette présente une patte recourbée de manière à venir en appui contre l'extrémité de l'enveloppe,
- la barrette est sertie ou clippée sur le talon de la boite collectrice,
- le talon de la boîte collectrice présente au moins une poche extérieure et la barrette présente au moins une dent de clippage complémentaire de la poche extérieure,
- la colle est disposée dans la gorge du talon de la boîte collectrice de manière à combler les jeux d'assemblage du renfort métallique et de l'extrémité de l'enveloppe du faisceau reçue dans la gorge.

D'autres caractéristiques et avantages de l'invention apparaîtront plus clairement à la lecture de la description suivante, donnée à titre d'exemple illustratif et non limitatif, et des dessins annexés parmi lesquels :
- la figure 1 est une vue en perspective d'un échangeur thermique selon un premier mode de réalisation,
- la figure 2 représente une vue en perspective d'un faisceau d'échange de l'échangeur de la figure 1,
- la figure 3 est une vue en coupe longitudinale de l'échangeur de la figure 1,
- la figure 4 est une vue en perspective d'un talon d'une boîte collectrice de l'échangeur et d'une extrémité d'une enveloppe du faisceau de l'échangeur,
- la figure 5a est une première vue en coupe de la figure 4,
- la figure 5b est une deuxième vue en coupe de la figure 4 illustrant des centreurs latéraux dans le talon de la boîte collectrice,
- la figure 6 est une vue en coupe transversale de l'échangeur de la figure 1,
- la figure 7a est une vue agrandie d'une partie de la figure 3 représentant en coupe une partie du talon d'une boîte collectrice, une extrémité de l'enveloppe du faisceau de l'échangeur reçue dans une gorge du talon et une partie d'un insert métallique moulé dans le talon de la boîte collectrice,
- la figure 7b est une vue représentant une partie du talon d'une boîte collectrice, une extrémité de l'enveloppe du faisceau de l'échangeur reçue dans une gorge du talon et une partie d'un insert métallique moulé dans le talon de la boîte collectrice, selon une coupe entre deux ondulations de l'insert métallique,
- la figure 8 est une vue en perspective éclatée d'un échangeur thermique selon un deuxième mode de réalisation avant assemblage d'un renfort métallique sur les boîtes collectrices,
- la figure 9a est une vue à l'état assemblé de l'échangeur de la figure 8,
- la figure 9b est une vue de dessus de la figure 9a,
- la figure 10 est une vue en coupe longitudinale de l'échangeur des figures 9a et 9b, et
- la figure 11 est une vue agrandie d'une partie de la figure 10 représentant en coupe une partie du talon d'une boîte collectrice, une extrémité de l'enveloppe du faisceau de l'échangeur reçue dans une gorge du talon et une partie d'une barrette de fixation clippée sur la boîte collectrice.

Dans ces figures, les éléments sensiblement identiques portent les mêmes références.

L'invention concerne un échangeur thermique, en particulier pour refroidir l'air de suralimentation pour moteur thermique, tel qu'un moteur diesel de véhicule automobile.

Un tel échangeur peut être un échangeur dit « air-eau », c'est-à-dire un échangeur dans lequel les fluides qui échangent de la chaleur sont l'air et l'eau. Dans le cas d'un refroidisseur d'air de suralimentation; l'eau est de préférence de l'eau du circuit de refroidissement dit "basse température" dudit moteur; il s'agit typiquement d'eau glycolée.

Bien entendu, l'invention n'est pas limitée aux refroidisseurs d'air de suralimentation de véhicules automobiles et peut s'appliquer à d'autres types d'échangeurs thermiques.

### Premier mode de réalisation

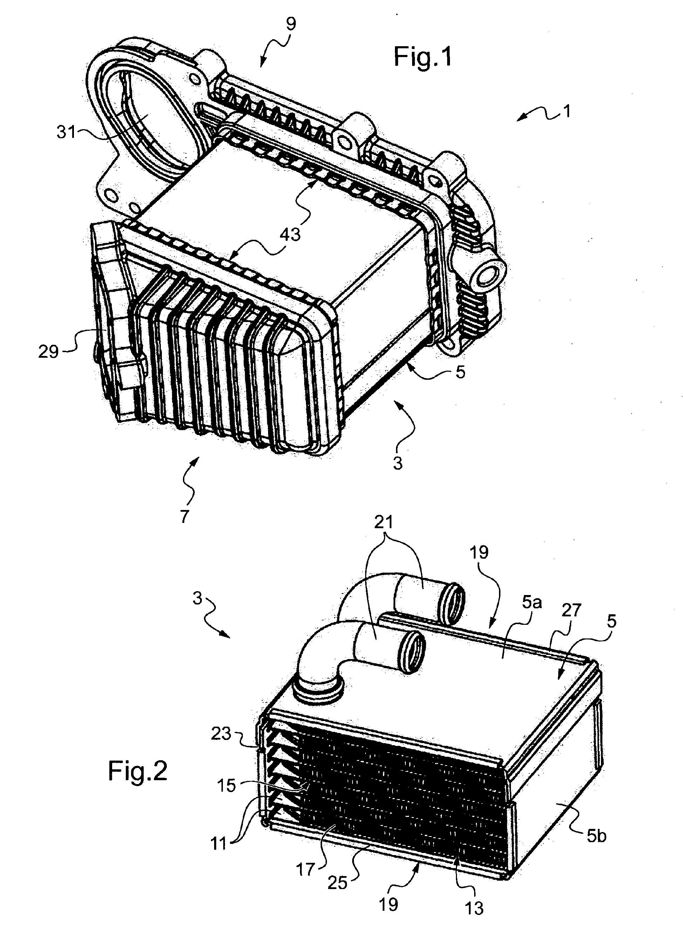

On a représenté sur la figure 1, un échangeur 1 thermique selon un premier mode de réalisation.

Il s'agit par exemple d'un refroidisseur d'air de suralimentation pour un moteur du véhicule automobile.

Cet échangeur 1 comporte :
- un faisceau 3 d'échange thermique entre un premier fluide tel que l'air de suralimentation et un deuxième fluide tel que le liquide de refroidissement,
- une enveloppe 5 de réception du faisceau d'échange 3, et
- deux boîtes collectrices d'entrée 7 et de sortie 9 du premier fluide, ici de l'air de suralimentation.

En se référant à la figure 2, le faisceau 3 d'échange thermique comporte un empilement de plaques 11.

Il s'agit par exemple de plaques embouties 11.

Une plaque 11 peut présenter une forme générale rectangulaire. Le faisceau 3 présente ainsi une forme sensiblement parallélépipédique.

Les plaques 11 sont disposées par paires.

L'empilement des plaques 11 permet de délimiter d'une part des premiers canaux 13 pour la circulation du premier fluide, ici l'air, et d'autre part des seconds canaux 15 pour la circulation du second fluide, ici un liquide de refroidissement tel que de l'eau.

Les seconds canaux 15 pour la circulation du second fluide sont donc définis par deux plaques adjacentes d'une paire. Quant aux premiers canaux 13 ils sont délimités à chaque fois entre les plaques 11 agencées en vis-à-vis de deux paires de plaques 11 adjacentes.

Ainsi, selon le mode de réalisation décrit, les plaques 11 assemblées par paires délimitent entre elles des canaux de circulation alternés pour un liquide de refroidissement, le plus souvent l'eau de refroidissement du circuit du moteur, dans les seconds canaux 15, et pour l'air de suralimentation à refroidir dans les premiers canaux 13.

On peut prévoir dans les premiers canaux 13 des éléments de perturbation 17, par exemple réalisés sous forme d'intercalaires ondulés, de façon à perturber l'écoulement de l'air, selon l'exemple décrit, dans ces premiers canaux 13 en augmentant la surface d'échange. La perturbation permet de faciliter les échanges thermiques entre l'air et l'eau au travers des parois des plaques 11.

Dans ce cas, les plaques 11 alternent avec des éléments perturbateurs, réalisés ici sous la forme d'intercalaires ondulés 17. Les plaques 11 et les intercalaires 17 sont avantageusement réalisés dans un alliage d'aluminium et brasés ensemble.

En outre, les plaques 11 comportent respectivement des collecteurs (non visibles sur les figures), pour le passage du second fluide, ici l'eau. Ces collecteurs communiquent respectivement entre eux, pour permettre la circulation du second fluide entre les plaques 11.

Bien entendu, le second fluide peut circuler en plusieurs passes. Ceci peut se faire notamment par l'agencement de nervures dans les plaques 11, formant saillies dans le passage d'écoulement du second fluide.

Comme mentionné précédemment, le faisceau d'échange 3 est reçu dans une enveloppe 5.

L'enveloppe 5 présente au moins une ouverture 19 permettant l'assemblage du faisceau 3 avec les boîtes collectrices 7,9 (figure 1).

Selon le mode de réalisation illustré sur les figures 1 et 2, l'enveloppe 5 présente deux ouvertures 19 opposées de part et d'autre du faisceau 3 pour l'assemblage d'une part avec la boîte d'entrée 7 et d'autre part avec la boîte de sortie 9.

L'enveloppe 5 comporte des tubulures 21 d'entrée et de sortie d'eau dans l'échangeur 1, associés à un circuit d'eau dans lequel l'échangeur 1 est monté et communiquant respectivement avec les collecteurs (non représentés) des plaques 11 du faisceau d'échange 3.

L'enveloppe 5 comporte par exemple deux demi-coquilles 5a et 5b, avantageusement réalisées aussi dans un alliage d'aluminium.

L'ensemble formé par les plaques 11, éventuellement les intercalaires ondulés 17, et les deux demi-coquilles 5a et 5b peut être ainsi brasé pour former le faisceau 3.

Chaque demi-coquille 5a,5b peut présenter une forme générale sensiblement en « U ». Et, les demi-coquilles 5a et 5b sont par exemple agencées avec leurs concavités opposées.

En outre, au moins une des demi-coquilles 5a,5b comporte un décrochement 23 afin de permettre l'adaptation des deux demi-coquilles 5a,5b l'une sur l'autre.

En outre, comme on le remarque plus particulièrement sur la figure 2, la largeur de chacune des deux demi-coquilles 5a et 5b est supérieure à la largeur des plaques 11 du faisceau d'échange 3. De cette manière, l'enveloppe 5 comporte au moins une extrémité 25,27 qui dépasse du faisceau 3.

Selon le mode de réalisation décrit, l'enveloppe 5 comporte deux extrémités opposées 25 et 27 qui dépassent de part et d'autre du faisceau 3 (cf figure 2).

Comme évoqué précédemment, l'échangeur 1 comporte, à chacune de ses extrémités, une boîte collectrice d'air; d'une part une boîte d'entrée 7 d'air et, d'autre part une boîte de sortie 9 d'air (cf figure 1).

Les boîtes collectrices 7 et 9 peuvent être réalisées en matière plastique moulée.

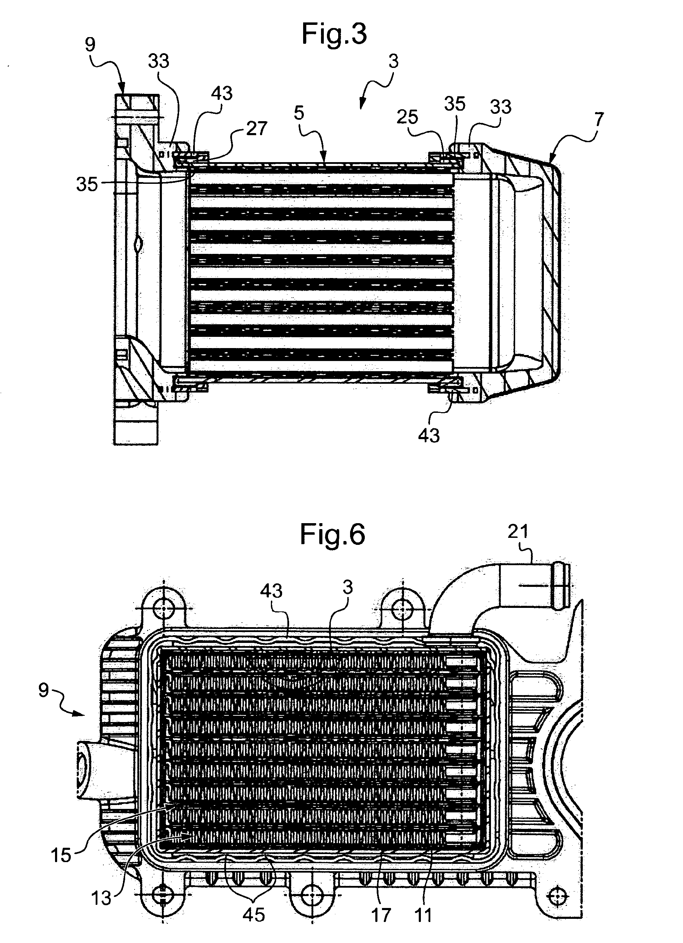

Les boîtes collectrices 7,9 sont montées de part et d'autre du faisceau 3. Ainsi, les plaques 11 débouchent dans les boîtes collectrices 7 et 9 (cf figure 3).

Les boîtes collectrices 7 et 9 (cf figures 1 et 3) sont reliées à un circuit d'air dans lequel est monté l'échangeur 1 et présentent respectivement un orifice d'entrée 29 et de sortie 31. L'air est introduit dans les plaques 11 par l'intermédiaire de la boîte d'entrée 7 et est recueilli en sortie des plaques 11 par la boîte de sortie 9.

Les boîtes collectrices 7 et 9 sont respectivement adaptées aux extrémités 25 et 27 de l'enveloppe 5 qui dépassent du faisceau 3. Selon l'exemple illustré sur la figure 3, la boîte d'entrée 7 est adaptée à l'extrémité 25 de l'enveloppe et la boîte de sortie 9 est adaptée à l'extrémité 27 de l'enveloppe 5.

À cet effet, chacune des boîtes collectrices 7 et 9 comporte un talon 33 dans lequel est prévue une gorge 35 pour recevoir l'extrémité 25 ou 27 associée de l'enveloppe 5.

Cette gorge 35 peut s'étendre sur toute la périphérie des boîtes collectrices 7 et 9.

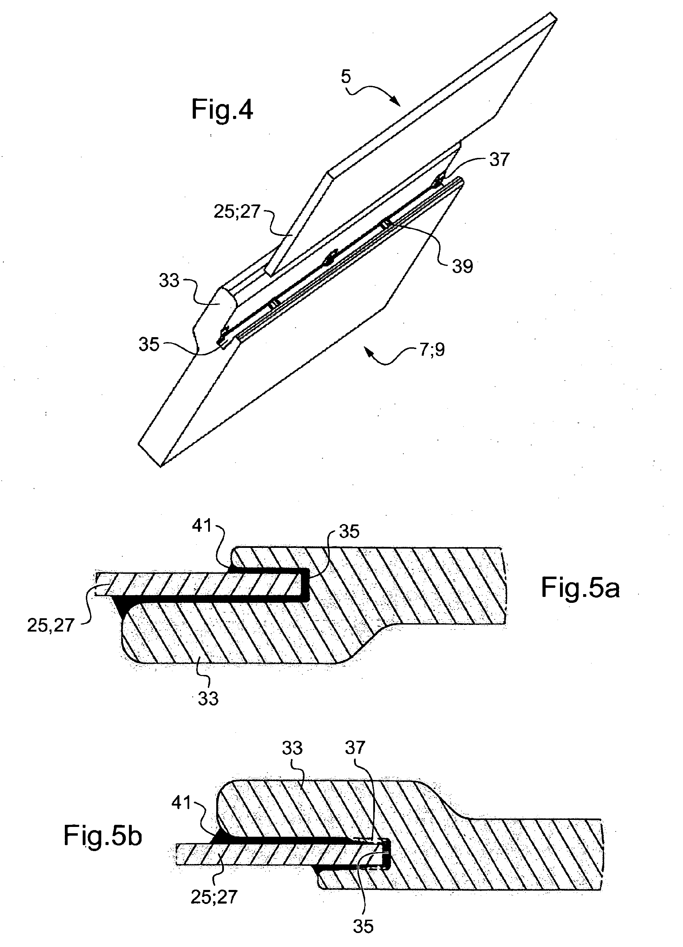

La figure 4 représente de façon simplifiée une vue éclatée d'un talon 33 d'une boîte collectrice 7 ou 9 et d'une extrémité 25 ou 27 de l'enveloppe 5, avant assemblage.

On peut prévoir des centreurs 37 disposés sur les parois latérales du talon 33 de part et d'autre de la gorge 35.

Ces centreurs 37 sont par exemple moulés sur les parois latérales du talon 33.

On peut aussi prévoir des centreurs 39 dans le fond de la gorge 35. Ces centreurs 39 peuvent également être moulés dans le fond de la gorge 35. L'extrémité 25 ou 27 de l'enveloppe 5 insérée dans la gorge 35 arrive en butée contre ces centreurs 39.

On peut disposer les centreurs 37 et 39 en alternant les centreurs latéraux 37 avec les centreurs 39 de fond de gorge 35.

Une quantité de colle 41 est disposée à l'intérieur de la gorge 41 pour la fixation des extrémités 25 et 27 de l'enveloppe 5, comme cela est visible sur les figures 5a,5b.

Les centreurs 37 et 39 assurent un cordon continu de colle 41 après l'insertion de l'extrémité 25 ou 27 de l'enveloppe 5 du faisceau 3 dans la gorge 35.

En effet, si l'enveloppe 5 est en appui sur une des parois latérales de part et d'autre de la gorge 35 au début de l'insertion de l'extrémité 25 ou 27 dans la gorge 35, les centreurs latéraux 37 permettent à la colle de diffuser entre l'extrémité 25 ou 27 de l'enveloppe 5 et la paroi latérale de la gorge 35 tout au long de l'insertion de l'enveloppe 5 du faisceau 3 dans la gorge 35 (cf figure 5b).

De plus, du fait des centreurs 39 formant butées pour l'extrémité 25 ou 27 de l'enveloppe 5, la colle 41 assure ainsi la liaison entre le fond de la gorge 35 et l'épaisseur de l'enveloppe 5 du faisceau 3.

Enfin, le cordon de colle 41 est continu entre le fond de la gorge 35 et les parois latérales de celle-ci lorsque les centreurs latéraux 37 sont alternés avec les centreurs 39 de fond de gorge 35.

La colle 41 utilisée pour l'assemblage des boîtes collectrices 7 et 9, et de l'enveloppe 5 du faisceau 3 est choisie en fonction de la nature des matériaux à assembler.

On utilise avantageusement une colle de type silicone, compte tenu de sa souplesse et de sa capacité à absorber les différences de dilatation, ou encore de la colle epoxy.

En se référant à nouveau à la figure 1 et à la figure 6, l'échangeur 1 peut comprendre en outre un renfort métallique 43 agencé en contact mécanique d'une part avec au moins une boîte collectrice 7 ou 9 et d'autre part avec l'extrémité 25 ou 27 de l'enveloppe 5 reçue dans la gorge 35 de la boîte collectrice 7 ou 9.

Ce renfort métallique 43 permet notamment de renforcer la liaison par collage entre l'enveloppe 5 et les boîtes collectrices 7 et 9.

Selon le premier mode de réalisation décrit, le renfort métallique 43 comprend au moins un insert métallique 43 dans le talon 33 d'une boîte collectrice 7 ou 9. On pourrait prévoir par exemple un insert métallique 43 uniquement sur la boîte de sortie 9 destinée à être fixée sur la culasse (non représentée) d'un moteur dans le cas d'un échangeur 1 pour le refroidissement de l'air de suralimentation du moteur, car c'est cette boîte de sortie 9 qui est la plus sollicitée mécaniquement.

Selon le mode de réalisation illustré sur les figures 1 et 3, le renfort métallique 43 comprend deux inserts métalliques 43.

Chaque insert 43 est par exemple moulé dans le talon 33 d'une boîte collectrice 7 ou 9, de manière à être réalisé d'une seule pièce avec la boîte collectrice 7 ou 9.

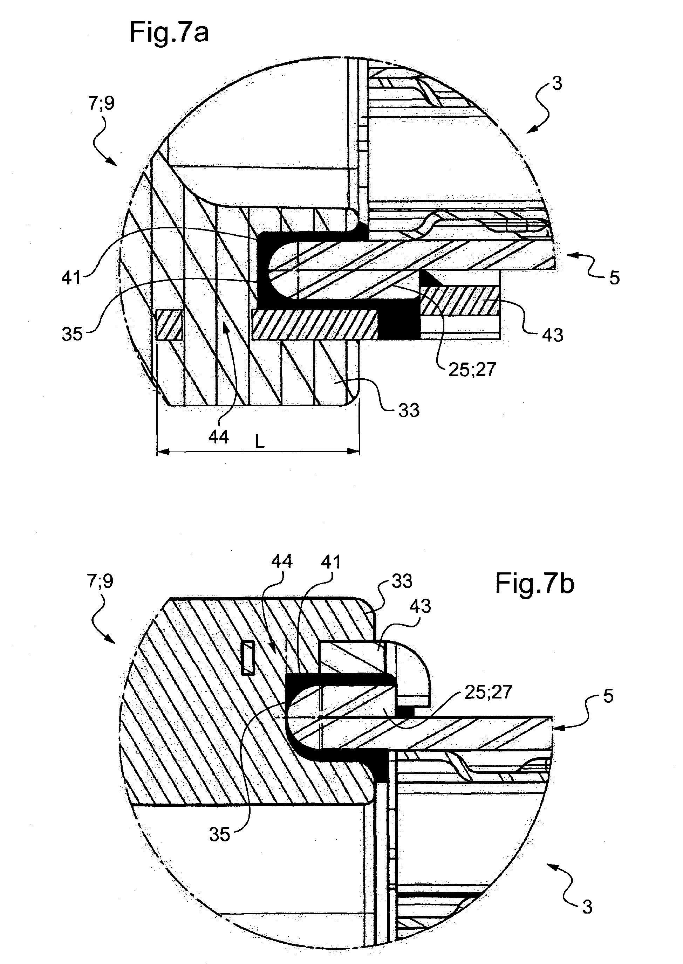

La liaison entre l'insert 43 et la boîte collectrice 7 ou 9 est donc rigide. En effet, comme on le voit mieux sur les figures 7a et 7b en coupe, l'insert 43 présente une partie noyée dans la matière plastique du talon 33 de la boîte collectrice 7 ou 9 qui vient combler des espaces 44 d'ancrage de l'insert 43.

De plus, l'insert métallique 43 présente une longueur L d'insert ancrée dans le talon 33 supérieure à la profondeur de la gorge 35 dans le talon 33 de la boîte collectrice 7 ou 9. L'insert 43 dépasse donc le fond de la gorge 35.

Et en outre, la face intérieure de l'insert 43 contribue à délimiter une face latérale de la gorge 35.

L'insert métallique 43 est ensuite serti sur l'extrémité de l'enveloppe 5. L'insert métallique 43 ancré de manière rigide dans le talon 33 en plastique pallie donc le défaut du plastique en permettant de réaliser un sertissage sur l'enveloppe 5.

Pour ce faire, l'insert 43 est déformé localement de manière à venir contre l'extrémité 25 ou 27 de l'enveloppe 5, comme cela est plus visible sur la figure 6 et les figures 7a et 7b.

L'insert 43 ainsi déformé présente selon l'exemple illustré des ondulations ou vagues 45 (cf figures 1 et 6).

En outre, l'extrémité 25 ou 27 de l'enveloppe 5 présente une sur-épaisseur (mieux visible sur les figures 7a,7b), c'est-à-dire une épaisseur supérieure au reste de l'enveloppe 5, contre laquelle est serti l'insert 43. Pour ce faire, l'enveloppe 5 présente par exemple une extrémité 25 ou 27 recourbée. Cette sur-épaisseur permet une meilleure insertion de l'enveloppe 5 dans la gorge 35 des boîtes collectrices 7, 9, et une meilleure répartition de la colle 41.

La colle 41 est alors disposée dans la gorge 35. Cette colle 41 permet d'obtenir une certaine compacité de l'ensemble.

De plus, le sertissage de l'insert 43 ancré rigidement dans le talon 33 sur l'enveloppe 5, assure un maintien des éléments reçus dans la gorge 35 pendant la polymérisation de la colle 41.

On peut aussi prévoir de disposer la colle 41 dans la gorge 35 de manière à combler tous les jeux d'assemblage entre les éléments dans la gorge ; plus précisément la colle 41 peut venir combler les jeux entre l'insert 43 et l'extrémité 25 ou 27 de l'enveloppe 5.

En outre, la liaison obtenue par collage entre le faisceau 3 de l'échangeur 1 et les boîtes d'entrée 7 et de sortie 9, est renforcée par le sertissage de l'insert métallique 43 sur l'enveloppe 5 et permet d'éviter une rupture brutale de la liaison.

Par ailleurs, on peut prévoir un insert métallique 43 sur toute la périphérie du talon 33 d'une boîte collectrice 7 ou 9.

En outre, un ou plusieurs sertissages de l'insert 43 sur l'enveloppe 5 peuvent se faire sur toute la périphérie. Dans ce cas on obtient un double maintien, et la colle 41 fait surtout office d'étanchéité. On peut donc envisager de remplacer cette colle 41 par un joint d'étanchéité par exemple.

Par ailleurs, même si les besoins ne sont pas les mêmes pour les deux boîtes collectrices 7 et 9, car la boîte de sortie 9 est plus sollicitée mécaniquement du fait des fixations sur la culasse (non représentée), on peut mouler deux inserts 43 pour les deux boîtes 7 et 9, et les sertir sur l'enveloppe 5, avec le même outillage afin de faciliter la mise en oeuvre.

En variante, on pourrait prévoir que le talon 33 de la boîte collectrice 7 ou 9 présente des parties saillantes qui soient directement déformées localement pour être serties sur l'extrémité de l'enveloppe 5.

### Deuxième mode de réalisation

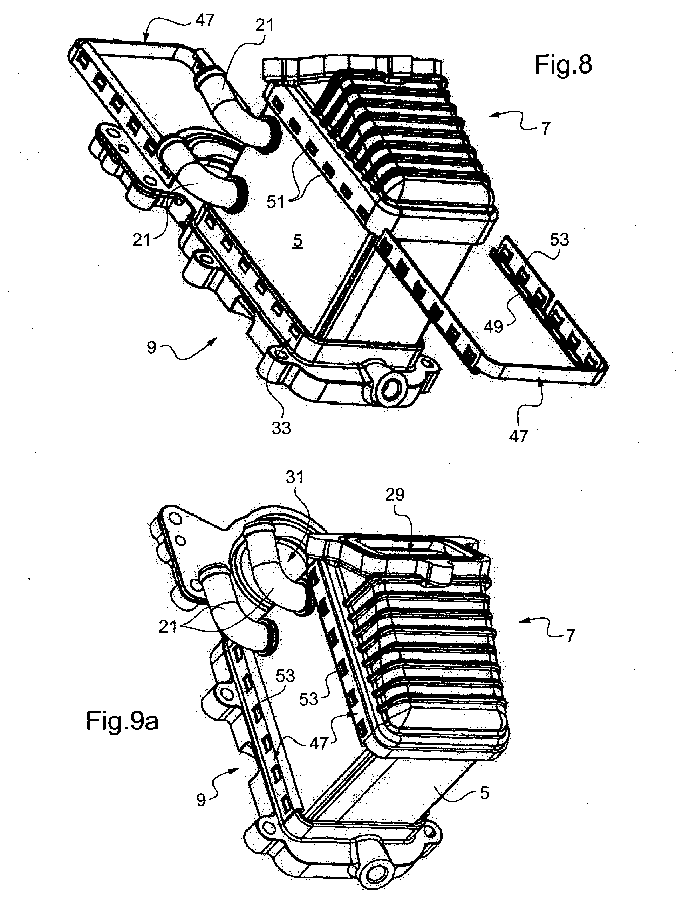

Les figures 8 à 11 illustrent un deuxième mode de réalisation de l'échangeur 1 dans lequel le renfort métallique diffère du premier mode de réalisation.

Selon ce second mode de réalisation, le renfort métallique 47 comprend au moins une barrette de fixation 47.

Selon l'exemple illustré cette barrette 47 est agencée autour du talon 33 d'une boîte collectrice 7 ou 9. Cette barrette 47 est de plus agencée en contact avec l'extrémité 25 ou 27 de l'enveloppe 5 reçue dans la gorge 35 du talon 33.

Comme pour le premier mode de réalisation, cette barrette 47 peut être agencée de façon préférée au droit des sollicitations mécaniques les plus fortes ; notamment au droit des fixations sur la culasse (non représentée) du moteur pour un refroidisseur d'air de suralimentation du moteur. La barrette 47 peut donc être mise en place localement au niveau de zones susceptibles d'être fortement sollicitées.

En variante, la barrette 47 peut être agencée sur toute la périphérie du talon 33 comme dans l'exemple illustré.

De plus, on peut prévoir une ou plusieurs barrettes 47 pour chaque boîte collectrice 7 et 9.

Selon l'exemple illustré sur la figure 8, deux barrettes 47 sont prévues ; une première barrette 47 associée à la boîte d'entrée 7 et une deuxième barrette 7 associée à la boîte de sortie 9.

Une barrette de fixation 47 présente une forme adaptée à la forme du talon 33 associé. Ici, une barrette 47 présente une forme sensiblement en « U » qui vient entourer le talon 33 sur trois côtés.

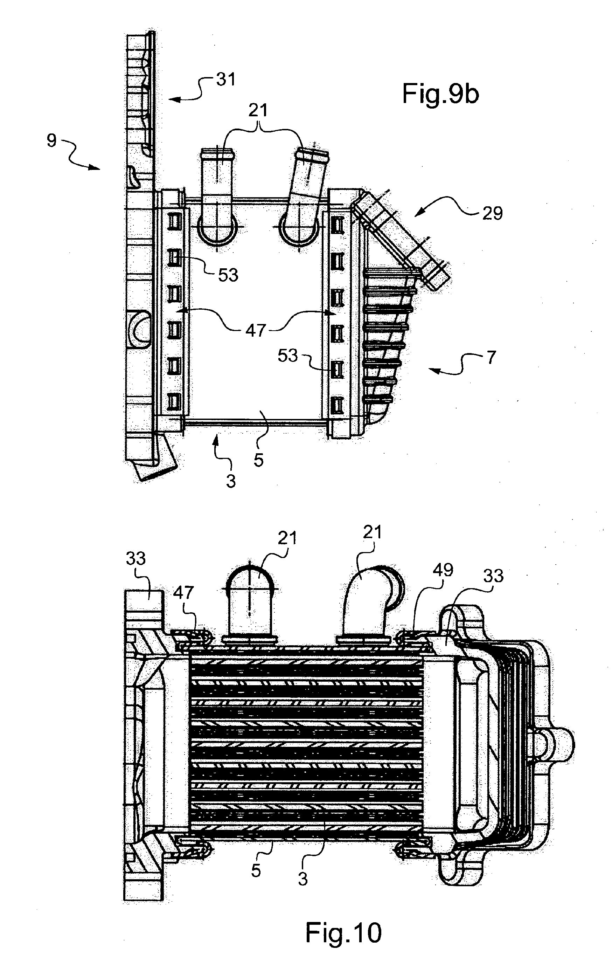

Les barrettes 47 sont par exemple montées en force. Le montage d'une barrette 47 se fait comme suit : on glisse la barrette 47 dans la largeur du faisceau 3, parallèlement au talon 33 de la boîte collectrice associée 7 ou 9, puis on pousse la barrette 47 perpendiculairement au talon 33 ; la barrette 47 est alors positionnée autour du talon 33 comme l'illustre les figures 9a et 9b.

L'enveloppe 5 présente encore une patte recourbée 49 qui vient prendre appui sur l'extrémité 25 ou 27 de l'enveloppe 5. Cette patte 49 est mieux visible sur les figures 8, 10 et 11.

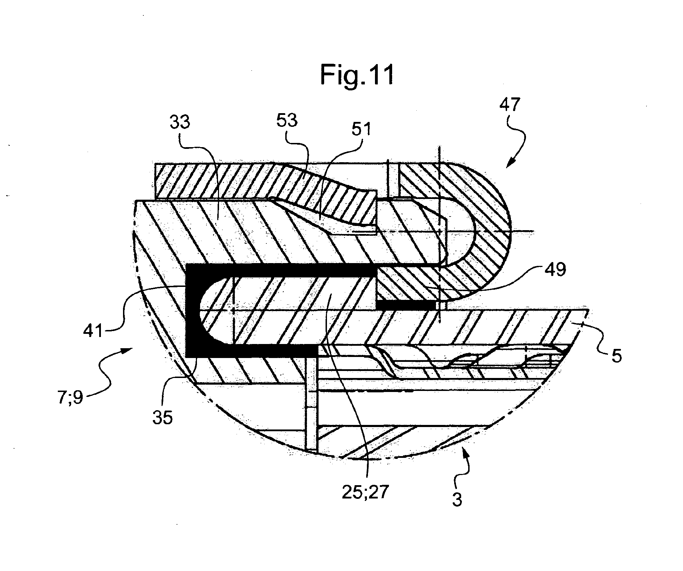

Chaque barrette 47 peut alors être fixée sur la boite collectrice 7 ou 9 associée en prenant appui sur l'extrémité 25 ou 27 de l'enveloppe 5, comme l'illustre la figure 11.

La fixation de la barrette 47 peut se faire par exemple par sertissage ou encore par clippage, comme dans l'exemple représenté sur les figures 8 à 11.

En ce qui concerne le sertissage, la barrette 47 peut être déformée localement ou encore comprendre des dents de sertissage.

Selon l'exemple illustré avec un clippage de la barrette 47 sur une boîte collectrice 7 ou 9, la boîte collectrice 7 ou 9 peut présenter une ou plusieurs poches extérieures 51 (cf figures 8, 9a, 9b et 11).

Dans l'exemple illustré sur la figure 8, les talons 33 présentent chacun une pluralité de poches extérieures 51. En complément, les barrettes 47 peuvent présenter des dents de clippage 53 préalablement formées sur les barrettes 47 pour engager en force la ou les poches extérieures 51 des talons 33.

De façon similaire au premier mode de réalisation, l'extrémité 25 ou 27 de l'enveloppe 5 présente une sur-épaisseur (mieux visible sur les figures 10 et 11), contre laquelle vient en appui la patte recourbée 49 d'une barrette 47. Pour ce faire, l'enveloppe 5 présente par exemple une extrémité 25 ou 27 recourbée. Cette sur-épaisseur permet une meilleure insertion du faisceau dans la gorge des boîtes et une meilleure répartition de la colle 41.

La colle 41 insérée dans la gorge 35 peut être disposée de manière à combler tous les jeux d'assemblage entre la barrette 47, plus précisément son extrémité 49, et l'extrémité 25 ou 27 de l'enveloppe 5 reçue dans la gorge 35. Cette colle 41 garantit le positionnement de la barrette 47.

La liaison obtenue par collage entre le faisceau 3 et les boites d'entrée 7 et de sortie 9 est renforcée par le sertissage ou le clippage de la barrette 47 de fixation au talon 33.

L'utilisation d'une barrette 47 rapportée simplifie le moulage des boîtes collectrices 7 et 9. En effet, on s'affranchit des difficultés de mise en place du renfort métallique dans le moule des boîtes collectrices 7, 9.

On a décrit précédemment deux modes de réalisation du renfort métallique de l'échangeur.

Bien entendu, ces deux modes de réalisation peuvent être combinés.

À titre d'exemple, on peut prévoir de préférence un insert métallique 43 pour les zones fortement sollicitées mécaniquement et une barrette de fixation 47 pour les zones moins sollicitées.

On comprend donc qu'un échangeur 1 comprenant un renfort métallique 43 ou 47 permet de renforcer la liaison obtenue par collage entre le faisceau 3 et les boîtes collectrices 7 et 9. Cette liaison renforcée est particulièrement avantageuse pour les zones susceptibles d'être fortement sollicitées mécaniquement ; notamment au droit des fixations sur la culasse d'un moteur pour un échangeur de refroidissement d'air de suralimentation de ce moteur.

Par ailleurs, ce renfort métallique 43 ou 47 assure notamment une fonction de maintien pendant la polymérisation de la colle 41.

## Revendications

1. Échangeur thermique pour véhicule automobile, comprenant :
- un faisceau d'échange thermique (3) entre au moins un premier et un deuxième fluides,
- une enveloppe (5) de réception dudit faisceau (3) comportant deux extrémités (25,27) opposées qui dépassent de part et d'autre du faisceau (3),
- au moins une boîte collectrice (7 ; 9) pour le premier fluide, ladite boîte collectrice (7,9) étant réalisées en matière plastique et comportant respectivement un talon (33) présentant une gorge (35) de réception d'une extrémité (25,27) de l'enveloppe (5) et d'une colle, pour l'assemblage du faisceau (3) à ladite boîte collectrice (7,9) par collage,
**caractérisé en ce qu'**il comprend en outre un renfort métallique (43,47) agencé en contact mécanique d'une part avec au moins ladite boîte collectrice (7,9) et d'autre part avec l'extrémité (25,27) de l'enveloppe (5) reçue dans la gorge (35) de la boîte collectrice (7,9).

2. Échangeur selon la revendication 1, **caractérisé en ce que** l'enveloppe (5) présente une extrémité (25,27) recourbée contre laquelle le renfort métallique (43,47) est agencé en appui.

3. Échangeur selon l'une des revendications 1 ou 2, **caractérisé en ce que** le renfort métallique (43) comprend au moins un insert métallique (43) moulé dans le talon (33) de ladite boîte collectrice (7,9), de manière à être réalisé d'une seule pièce avec la boîte collectrice (7,9).

4. Échangeur selon la revendication 3, **caractérisé en ce que** l'insert métallique (43) est agencé de manière à définir une paroi latérale de la gorge (35) dans le talon (33) de la boîte collectrice (7,9).

5. Échangeur selon l'une des revendications 3 ou 4, **caractérisé en ce que** l'insert métallique (43) présente une longueur (L) ancrée dans le talon (33) supérieure à la profondeur de la gorge (35) dans le talon (33) de la boîte collectrice (7,9).

6. Échangeur selon l'une des quelconque des revendications 3 à 5, **caractérisé en ce que** l'insert métallique (43) est serti sur l'extrémité (25,27) de l'enveloppe (5).

7. Échangeur selon la revendication 6, **caractérisé en ce que** l'insert (43) est serti sur l'extrémité (253,27) de l'enveloppe (5) par déformation locale.

8. Échangeur selon l'une quelconque des revendications 3 à 7, **caractérisé en ce que** l'insert (43) est agencé sur toute la périphérie du talon (33) de la boîte collectrice (7,9).

9. Échangeur selon l'une quelconque des revendications précédentes, **caractérisé en ce que** le renfort métallique (47) comprend au moins une barrette de fixation (47).

10. Échangeur selon la revendication 9, **caractérisé en ce que** la barrette de fixation (47) présente une forme sensiblement en « U ».

11. Échangeur selon l'une des revendications 9 ou 10, **caractérisé en ce que** la barrette (47) présente une patte (49) recourbée de manière à venir en appui contre l'extrémité (25,27) de l'enveloppe (5).

12. Échangeur selon l'une quelconque des revendications 9 à 11, **caractérisé en ce que** la barrette (47) est sertie ou clippée sur le talon (33) de la boite collectrice (7,9).

13. Échangeur selon la revendication 12, **caractérisé en ce que** le talon (33) de la boîte collectrice (7,9) présente au moins une poche extérieure (51) et **en ce que** la barrette (47) présente au moins une dent de clippage (53) complémentaire de la poche extérieure (51).

14. Échangeur selon l'une quelconque des revendications précédentes, **caractérisé en ce que** la colle (41) est disposée dans la gorge (35) du talon (33) de la boîte collectrice (7,9) de manière à combler les jeux d'assemblage du renfort métallique (43,47) et de l'extrémité (25,27) de l'enveloppe (5) du faisceau reçue dans la gorge (35).

## Patentansprüche

1. Wärmetauscher für ein Kraftfahrzeug, der enthält:
- ein Wärmetauscherbündel (3) zwischen mindestens einem ersten und einem zweiten Fluid,
- eine Hülle (5) zur Aufnahme des Bündels (3), die zwei gegenüberliegende Enden (25, 27) aufweist, die an beiden Seiten des Bündels (3) überstehen,
- mindestens einen Sammelbehälter (7; 9) für das erste Fluid, wobei der Sammelbehälter (7, 9) aus Kunststoff hergestellt ist und einen Absatz (33) mit einer Kehle (35) zur Aufnahme eines Endes (25, 27) der Hülle (5) und eines Klebers zum Zusammenfügen des Bündels (3) mit dem Sammelbehälter (7, 9) durch Kleben aufweist,
**dadurch gekennzeichnet, dass** er außerdem eine metallische Verstärkung (43, 47) enthält, die in mechanischem Kontakt einerseits mit mindestens dem Sammelbehälter (7, 9) und andererseits mit dem Ende (25, 27) der Hülle (5) angeordnet ist, das in der Kehle (35) des Sammelbehälters (7, 9) aufgenommen wird.

2. Tauscher nach Anspruch 1, **dadurch gekennzeichnet, dass** die Hülle (5) ein umgebogenes Ende (25, 27) hat, gegen das die metallische Verstärkung (43, 47) in Auflage angeordnet ist.

3. Tauscher nach einem der Ansprüche 1 oder 2, **dadurch gekennzeichnet, dass** die metallische Verstärkung (43) mindestens einen in den Absatz (33) des Sammelbehälters (7, 9) geformten metallischen Einsatz (43) enthält, um einstückig mit dem Sammelbehälter (7, 9) hergestellt zu werden.

4. Tauscher nach Anspruch 3, **dadurch gekennzeichnet, dass** der metallische Einsatz (43) so angeordnet ist, dass er eine Seitenwand der Kehle (35) im Absatz (33) des Sammelbehälters (7, 9) definiert.

5. Tauscher nach einem der Ansprüche 3 oder 4, **dadurch gekennzeichnet, dass** der metallische Einsatz (43) eine im Absatz (33) verankerte Länge (L) hat, die größer ist als die Tiefe der Kehle (35) im Absatz (33) des Sammelbehälters (7, 9).

6. Tauscher nach einem der Ansprüche 3 bis 5, **dadurch gekennzeichnet, dass** der metallische Einsatz (43) auf das Ende (25, 27) der Hülle (5) gequetscht ist.

7. Tauscher nach Anspruch 6, **dadurch gekennzeichnet, dass** der Einsatz (43) durch lokale Verformung auf das Ende (25, 27) der Hülle (5) gequetscht wird.

8. Tauscher nach einem der Ansprüche 3 bis 7, **dadurch gekennzeichnet, dass** der Einsatz (43) über den ganzen Umfang des Absatzes (33) des Sammelbehälters (7, 9) angeordnet ist.

9. Tauscher nach einem der vorhergehenden Ansprüche, **dadurch gekennzeichnet, dass** die metallische Verstärkung (47) mindestens eine Befestigungsleiste (47) enthält.

10. Tauscher nach Anspruch 9, **dadurch gekennzeichnet, dass** die Befestigungsleiste (47) im Wesentlichen eine "U"-Form hat.

11. Tauscher nach einem der Ansprüche 9 oder 10, **dadurch gekennzeichnet, dass** die Leiste (47) eine Lasche (49) hat, die umgebogen ist, um gegen das Ende (25, 27) der Hülle (5) in Auflage zu kommen.

12. Tauscher nach einem der Ansprüche 9 bis 11, **dadurch gekennzeichnet, dass** die Leiste (47) auf den Absatz (33) des Sammelbehälters (7, 9) gequetscht oder eingeklinkt ist.

13. Tauscher nach Anspruch 12, **dadurch gekennzeichnet, dass** der Absatz (33) des Sammelbehälters (7, 9) mindestens eine äußere Tasche (51) hat, und dass die Leiste (47) mindestens einen zur äußeren Tasche (51) komplementären Einklinkzahn (53) hat.

14. Tauscher nach einem der vorhergehenden Ansprüche, **dadurch gekennzeichnet, dass** der Kleber (41) in der Kehle (35) des Absatzes (33) des Sammelbehälters (7, 9) so angeordnet ist, dass er die Montagespiele der metallischen Verstärkung (43, 47) und des in der Kehle (35) aufgenommenen Endes (25, 27) der Hülle (5) des Bündels ausfüllt.

## Claims

1. Heat exchanger for a motor vehicle, comprising:
- a core bundle (3) for the exchange of heat between at least a first and a second fluid,
- a shell (5) to house the said core bundle (3), comprising two opposite ends (25, 27) which extend beyond the core bundle (3) at each end,
- at least one header (7; 9) for the first fluid, the said header (7, 9) being made of plastic and respectively comprising a heel (33) having a groove (35) to house one end (25, 27) of the shell (5) and to house an adhesive so that the core bundle (3) can be assembled with the said header (7, 9) by bonding,
**characterized in that** it further comprises a metal reinforcement (43, 47) arranged in mechanical contact on the one hand with at least the said header (7, 9) and on the other hand with the end (25, 27) of the shell (5) housed in the groove (35) of the header (7, 9).

2. Exchanger according to Claim 1, **characterized in that** the shell (5) has a bent-over end (25, 27) against which the metal reinforcement (43, 47) is arranged so that it presses thereagainst.

3. Exchanger according to one of Claims 1 and 2, **characterized in that** the metal reinforcement (43) comprises at least a metal insert (43), moulded into the heel (33) of the said header (7, 9) so as to be formed in one piece with the header (7, 9).

4. Exchanger according to Claim 3, **characterized in that** the metal insert (43) is arranged so that it defines a lateral wall of the groove (35) in the heel (33) of the header (7, 9).

5. Exchanger according to one of Claims 3 and 4, **characterized in that** the metal insert (43) has a length (L) anchored in the heel (33) that is greater than the depth of the groove (35) in the heel (33) of the header (7, 9).

6. Exchanger according to any one of Claims 3 to 5, **characterized in that** the metal insert (43) is crimped to the end (25, 27) of the shell (5).

7. Exchanger according to Claim 6, **characterized in that** the insert (43) is crimped to the end (25, 27) of the shell (5) by local deformation.

8. Exchanger according to any one of Claims 3 to 7, **characterized in that** the insert (43) is arranged all around the periphery of the heel (33) of the header (7, 9).

9. Exchanger according to any one of the preceding claims, **characterized in that** the metal reinforcement (47) comprises at least one fixing strip (47).

10. Exchanger according to Claim 9, **characterized in that** the fixing strip (47) is substantially U-shaped.

11. Exchanger according to one of Claims 9 and 10, **characterized in that** the strip (47) has a tab (49) that is bent over in such a way as to press against the end (25, 27) of the shell (5).

12. Exchanger according to any one of Claims 9 to 11, **characterized in that** the strip (47) is crimped or clipped to the heel (33) of the header (7, 9).

13. Exchanger according to Claim 12, **characterized in that** the heel (33) of the header (7, 9) has at least one external pocket (51) and **in that** the strip (47) has at least one clip-fastening tooth (53) that complements the external pocket (51).

14. Exchanger according to any one of the preceding claims, **characterized in that** the adhesive (41) is placed in the groove (35) of the heel (33) of the header (7, 9) in such a way as to fill the clearance for assembly of the metal reinforcement (43, 47) and of the end (25, 27) of the core bundle shell (5) housed in the groove (35).
